# EUROPEAN PATENT APPLICATION

(11) **EP 4 407 303 A1**
(43) Date of publication of application: **31.07.2024**
(21) Application number: 24152599.7
(22) Date of filing: 18.01.2024
(51) Int. Cl.: G01N 21/90

(54) **A SYSTEM AND METHOD FOR NON-DESTRUCTIVE INSPECTION OF A VIAL**

(30) Priority: 25.01.2023 LU 503393
(71) Applicant: Univerza V Ljubljani, 1000 Ljubljana (SI)
(72) Inventor: OSTERMAN, Natan, 1000 Ljubljana (SI)
(74) Representative: Zacco GmbH

(57) **Abstract**

A system for non-destructive inspection of a vial comprises:
a holder for a vial,
a lens, in particular a microscope objective lens, arranged below the holder, and
a first plurality of light sources,
wherein the holder is configured to hold a vial, when the vial is arranged in the holder, such that a bottom of the vial is facing downward, and
wherein the lens is arranged such that it faces the bottom of the vial, when the vial is arranged in the holder,
wherein light sources of the first plurality of light sources are arranged in an annular arrangement in a plane above the top of the holder, such that the light sources are located above a top of the vial, when the vial is arranged in the holder, and
wherein each light source of the plurality of light sources is individually controllable.

## Description

The present invention relates to a system for non-destructive inspection of a vial. The present invention also relates to a method of non-destructively inspecting a vial.

In the development of medication or drugs, such as biological drugs (also called biologics), an unwanted aggregation of proteins, such as therapeutic proteins, into the so-called sub-visible particles (sized below 100 µm) and visible particles (sized 100 µm and more) may occur. The aggregation of proteins into particles is a slow process. Therefore, particles are typically detected only in long-term stability tests. There are tests, in which the final formulation of the medicine is filled into a large number of vials, such as glass vials, which are stored for several months under suitable conditions. At certain time intervals, which are also called pull points, a test for the presence of particles is carried out. For each test, a few vials are opened, and the contents are transferred to analytical devices such as, e.g., FIM (flow imaging microscopy) or BMI (backgrounded membrane imaging), which enable the quantification of micron-sized particles present in the liquid. If too many particles are detected in the medicine, it is not suitable for use, so great care should be taken to their non-appearance when developing new formulations.

The above described tests can have several disadvantages. Once the vial is opened for analysis of the contents, it cannot be closed and the contents cannot be reused at the next time point. Consequently, many vials must undergo the stability test, possibly resulting in high costs. Furthermore, during the transfer of the liquid from the vial to an analytical testing device (typically pipetting) and during the operation of the testing device, the liquid is exposed to mechanical stress, such as fluid flows and shear forces, which can cause the breakdown of larger protein particles. Additionally, protein particles may stick together during transfer and are less likely to be detected.

Moreover, current destructive methods allow for the analysis of a particular vial at a particular time point, but they do not reveal any information about the dynamics of particle formation processes in that vial in the past.

Each vial of a biological drug must pass a visual inspection before distribution. During the inspection procedure, a trained operator rotates the vial in his hand, then looks at the contents with his naked eyes for a few seconds and tries to determine if there are any visible particles in the vial. If any particle is noticed, the vial is removed and often sent for destructive analysis of the contents to identify the particle, which is an expensive and time-consuming process.

It is thus an object of the present invention to provide an improved system and, correspondingly, an improved method that allow an examination of a vial in a reliable and simple way.

The object is satisfied by a system in accordance with the features of claim 1, and, respectively, by a method in accordance with the features of claim 13. Preferred embodiments of the present invention are described in the dependent claims.

In accordance with an aspect of the present invention, a system for non-destructive inspection of a vial comprises: a holder for a vial, a lens, in particular a microscope objective lens, arranged below the holder, and a first plurality of light sources, wherein the holder is configured to hold a vial, when the vial is arranged in the holder, such that a bottom of the vial is facing downward, and wherein the lens is arranged such that it faces the bottom of the vial, when the vial is arranged in the holder, wherein light sources of the first plurality of light sources are arranged in an annular arrangement in a plane above the top of the holder, such that the light sources are located above a top of the vial, when the vial is arranged in the holder, and wherein each light source of the plurality of light sources is individually controllable.

The lens is herein sometimes called "objective lens", but it can in general be a lens, whereas in some embodiments, an objective lens can be employed.

The arrangement of the light sources above the top of the holder and the top of the vial allows the vial to be well illuminated for examination especially for optical identification of unwanted particles in the vial by use of the microscope. Furthermore, as the light sources are individually controllable, an ideal illumination of the vial can be obtained. The illumination can be adjusted in dependence on the type of vial, its content and the position of the lens relative to the vial. Thereby, inspection of vials can be carried out in an improved way. During the inspection, the vial can remain sealed, so that its content does not get destroyed due to the inspection process. Thus, at least in some embodiments, the system enables non-destructive imaging and detection of visible and sub-visible particles in a vial, while the vial can remain sealed.

The described inspection system is in particular advantageous over classical transmission optical microscopy systems, which usually do not allow imaging of particles inside the vials for at least the following reasons: The vial cap prevents the passage of light from the illumination source to the microscope objective, the bottom of the vial is uneven and of variable thickness, and the combination of curved vial walls and liquid inside completely distorts the illumination due to a lensing effect.

The vial can be any kind of sealed container, such as a bottle or the like, which is transparent or at least partially transparent so that it can be examined by use of light. The vial can in particular be a glass vial, but it can also be made of another material.

The lens can be a microscope objective or the like. The lens might be interchangeable so that different magnifications can be used.

The light sources can be equally spaced from each other, in particular when seen in the circumferential direction. This allows for even illumination of the vial from all sides.

A center of the annular arrangement of the light sources can be - at least approximately - aligned with a center axis, in particular a vertical center axis, of the holder. The vial can thus be centered below the annular arrangement of the light sources of the first plurality of light sources.

The system might comprise a second plurality of light sources arranged in a plane, which is preferably above the holder. The light sources of the second plurality of light sources can be individually controllable. A vial can be illuminated from below using at least some of the light sources of the second plurality of light sources. This can further improve the inspection of vials.

In some embodiments, the second plurality of light sources can be located on the holder, in particular on an upper side of the holder.

In some embodiments, a cover, such as a cylindrical cover, can cover the vial and the light sources. The inner wall of the cylinder can be white, for example by painting, and diffusively reflect the light, in particular from the second plurality of light sources.

The first plurality of light sources can also be covered by the cover. For example, the first plurality of light sources can be arranged close to and/or underneath an upper side of the cover.

The light sources of the second plurality of light sources can be arranged in an annular arrangement in the plane, in particular such that the light sources are located above the bottom of the vial, when the vial is arranged in the holder. The light sources can be equally spaced from each other in the circumferential direction. Due to the arrangement of the light sources of the second plurality of light sources, an even illumination of the vial from all sides can be realized.

The light sources of the first plurality of light sources and/or the light sources of the second plurality of light sources can be of any kind of light source suitable for illuminating vials. In some embodiments, the light sources can be configured such that the light sources can provide selectively light at different wavelengths, in particular in the visible or infrared range. In some embodiments, the light sources can emit light in a defined wavelength range or they can emit white light. In some embodiments, each light source can be a LED. Here, LED means light emitting diode.

In some embodiments, each light source can comprise more than one LED, wherein each of the LEDs of the light source emits light at a different wavelength. Each LED of a light source can be individually controllable. This allows controlling the intensity of each LED and thus of the light source. When a light source includes one or more LEDs that can provide light at different wavelengths, an individual control of the LEDs also allows controlling the color output; in addition to the control of the intensity. The LEDs can be OLEDs (for organic LED) or micro-LEDs or of any other type of LED.

In some embodiments, each light source can be a RGB LED, which comprises at least three LEDs with one LED that can emit red light, one LED that can emit green light and one LED that can emit blue light. Each LED of a RGB LED can be individually controllable. By separately taking snapshots when a sample vial is illuminated with red, green and blue light, a simple multispectral image can be otained which can help to identify particles in the vial.

The system can comprise at least one UV light source configured to illuminate the vial, such as the bottom of the vial, when the vial is arranged in the holder. Undesired particles in the content of the vial can be detected more easily by use of UV light. UV means ultraviolet and relates to the corresponding ultraviolet frequency range.

The UV light source can be adapted to provide ultraviolet light at a wavelength of at least approximately 280 nanometer. At this wavelength, amino acid tryptophan (Trp), which is a protein component, has an absorption peak. Thus, a particle comprising this protein component can be detected more easily. More specifically, observing the intrinsic fluorescence of Trp can enable rapid discrimination of whether a detected particle is of protein origin (fluorescence is present) or not (e.g., glass, rubber particles from a vial stopper, cellulose fibers, etc., where fluorescence is not present). This kind of discrimination can be crucial in the development of biologics.

The holder, the first plurality of light sources, and optionally a second plurality of light sources, which can be arranged in a plane above the holder, can be fixed in position with respect to each other. Thus, a vial, when arranged in the holder, takes a defined position with respect to the first plurality of light sources and optionally with respect to the second plurality of light sources.

The lens and/or an arrangement including the holder, the first plurality of light sources and optionally the second plurality of light sources can be movable with respect to each other in a motion plane, in particular a xy-plane. The motion plane can be at least approximately orthogonal to an optical axis, in particular z-axis, of the lens. The lens can therefore be positioned variably with respect to the arrangement.

The arrangement and the lens can be moveable with respect to each other in the motion plane in a stepwise manner such that a set of predefined point coordinates in the motion plane become consecutively aligned with the optical axis of the lens. The whole bottom surface of a vial can therefore be scanned.

At least the arrangement of the holder, the first plurality of light sources and optionally the second plurality of light sources can be arranged on a stage, in particular a xy-translation stage. The stage can be configured to move in a stepwise manner the arrangement in the motion plane with respect to the lens, such that a set of predefined point coordinates in the motion plane are consecutively aligned with the optical axis of the lens. By use of the stage, the arrangement can be moved in a stepwise manner such that the point coordinates become consecutively aligned with the optical axis of the lens. Thereby, the whole bottom surface of a vial can be covered allowing a complete scan of the vial's bottom.

The set of predefined point coordinates can consist of or comprise point coordinates that are arranged in a pattern, for example a rectangular or quadratic pattern, in the motion plane. The pattern can cover at least the bottom of the vial, when the vial is arranged in the holder. The whole bottom surface of a vial can therefore be scanned completely in an efficient way.

The system can comprise a camera, such as a CMOS camera, which is connected to the lens. The camera can be configured to take at least one picture of at least a portion of the bottom of the vial when a point coordinate is aligned with the optical axis of the lens. The obtained pictures can be inspected by a user or automatically, for example, by a computer system hosting an image recognition tool.

The system, in particular a controller of the system, might be configured to control the light sources of the first plurality of light sources and optionally the light sources of the second plurality of light sources in accordance with a predefined lighting scheme given for the vial. The lighting scheme is preferably predefined for the corresponding type of vials and for the vial's content. The lighting scheme can be such that it optimally illuminates the vial.

The predefined lighting scheme can specify for each point coordinate which of the light sources of the first plurality of light sources is/are used for illumination. Thus, the lighting scheme can depend on the position of the lens or microscope objective with respect to the vial.

The predefined lighting scheme can specify for each point coordinate which of the light sources of the second plurality of light sources is/are used for illumination. Thus, the light sources of the second plurality of light sources can be controlled such as to optimally illuminate the vial in dependence on the position of the lens or microscope objective with respect to the vial.

In some embodiments, the lens is movable, in particular by control of a controller of the system, along its optical axis for adjustment of the distance between the lens and the bottom of the vial. The lens can be movable in particular in dependence on the respective point coordinate that is aligned with the optical axis of the lens and/or in dependence on a predetermined profile of the bottom of the vial. The focus of the lens can therefore be moved with respect to the vial, so that a small volume in the vial or in the bottom of the vial can be brought into the focus and thus properly examined.

The holder can be rotatable around its center axis. In some embodiments, the holder can be rotatable around its center axis such that, when the vial is located in the holder, the vial is rotated around its center axis. The holder can be motorized to rotate the vial around the vertical center axis, and the rotation can induce liquid flow inside the vial. With the help of flow, one can discriminate between particles in the vial liquid, as these particles move with the flow, and irregularities in the vial bottom on which the flow has no effect.

At least in some embodiments, the present invention can relate to a method of non-destructively inspecting a vial, in particular by use of a system in accordance with the present invention, the method comprises the steps:
arranging a vial in a holder such that a bottom of the vial is facing downward,
obtaining at least one picture of at least a portion of the bottom of the vial by use of a camera that is connected to a lens which is arranged such that it faces the bottom of the vial, while obtaining the at least one picture, individually controlling light sources of a first plurality of light sources, which is arranged in an annular arrangement in a plane above the top of the holder, such that the light sources are located above a top of the vial, in accordance with a predefined lighting scheme which specifies which of the light sources of the first plurality of light sources is/are used for illumination.

The method can simplify the inspection of vials. During the inspection, the respective vial can remain sealed, so that its content does not get destroyed due to the inspection process. Thus, the method can enable non-destructive imaging and detection of visible and sub-visible particles in a vial, while the vial can remain sealed.

The light sources of a second plurality of light sources, which can be arranged in a plane above the holder in an annular arrangement, can be individually controlled for illumination in accordance with the predefined lighting scheme, which can specify which of the light sources of the second plurality of light sources is/are used for illumination.

The lens and/or an arrangement of the holder, the first plurality of light sources and optionally the second plurality of light sources can be moved in a stepwise manner with respect to each other in a motion plane, in particular xy-plane, such that a set of predefined point coordinates in the motion plane become consecutively aligned with the optical axis of the lens. The motion plane can at least approximately be orthogonal to an optical axis, in particular z-axis, of the lens.

The lighting scheme can be dependent on the respective point coordinate which is aligned with the optical axis of the lens.

At least in some embodiments, the system enables non-destructive imaging of visible and sub-visible particles in a vial, while the vial can remain sealed. The system can be based on a motorized inverted microscope system and structured lighting can be provided by the light sources of the first plurality and the second plurality of light sources.

A diffuse type of lighting can be provided by use of a cover, such as a cylindrical cover, which can be arranged on the holder. The cover can surround the vial and the first and second plurality of light sources. The inner wall of the cover can diffusively reflect light from at least one of the first and second plurality of light sources.

At least in some embodiments, visible or sub-visible particles can be detected or are detected in a method in accordance with the invention, in particular by use of an image recognition tool or the like.

At least in some embodiments, the present invention can relate to a method of non-destructively inspecting a vial, in particular by use of a system in accordance with the present invention, the method comprises:
providing a vial being of a type of vials in the holder, such that a bottom of the vial is facing downward, wherein the vial is filled with dry particles that cover the bottom of the vial,
moving a lens and/or an arrangement of the holder, a first plurality of light sources and
optionally a second plurality of light sources in a stepwise manner with respect to each other in a motion plane, such that a set of predefined point coordinates in the motion plane become consecutively aligned with the optical axis of the lens, wherein the optical axis of the lens is arranged at least approximately orthogonal to the motion plane and wherein the lens is arranged below the vial such that it faces the bottom of the vial, and determining, for each point coordinate, by moving the lens along its optical axis, a position of the lens at which the dry particles are focused, and
determining a profile of the bottom of the type of vials based on the determined positions of the lens.

At least in some embodiments, the invention can relate to a method of non-destructively inspecting a vial, in particular by use of a system in accordance with the present invention, wherein the method comprises:
providing, in a holder, a sealed vial that is filled with a particular medium, in particular solution, such that a bottom of the vial is facing downward,
moving a lens and/or an arrangement of the holder, a first plurality of light sources and
optionally a second plurality of light sources in a stepwise manner with respect to each other in a motion plane, such that a set of predefined point coordinates in the motion plane become consecutively aligned with an optical axis of the lens, wherein the optical axis of the lens is arranged at least approximately orthogonal to the motion plane, wherein the lens is arranged below the vial such that it faces the bottom of the vial, and determining, for each point coordinate, when the point coordinate is aligned with the lens, which of the light sources of the first plurality of light sources and optionally which of the light sources of the second plurality of light sources are suitable for illumination of the vial at the respective point coordinate by use of at least the following steps:
   (a) turning on a single light source or a group of light sources and evaluating the obtained picture,
   (b) if the image is too dark or too bright, then the specific light source or group of light sources is not suitable to be used for imaging and otherwise storing the light source or the group of light sources in a lighting scheme for the respective point coordinate,
   (c) repeating steps (a) and (b) until all light sources have been evaluated for all point coordinates.

In some embodiments, an image is too dark if the mean pixel value of the image is, for example, below 10% of the total pixel range. For example, 8-bit images can have a range of 0 to 255 in each pixel. A 10% threshold would then be a mean pixel value of 25. In some embodiments, an image is too bright if the mean pixel value is, for example, above 50% of the total range. A 50% threshold for an 8-bit image would then be a mean pixel value of at least 127.

The invention will be described by way of examples in the following with reference to the accompanying drawings:
- Fig. 1: shows schematically an embodiment of an inspection system in accordance with the present invention.
- Fig. 2: shows schematically a scanning pattern used in a method carried out by the inspection system of Fig. 1.
- Fig. 3: shows schematically a vial placed in an immersion cylindrical cover on a holder of the inspection system of Fig. 1.
- Fig. 4: shows sample images obtained from the inspection of vials using the system of Fig. 1.
- Fig. 5: shows a 50 micrometre-sized particle close to a vial edge imaged at different magnifications and illuminations.
- Fig. 6: shows schematically a side view of a microscope objective and a vial to illustrate how a curved form of a bottom of a vial can be determined.
- Fig. 7: shows schematically a graph of a curved bottom of the vial of Fig. 6.
- Fig. 8: shows schematically a graph with a profile of the curved bottom of the vial of Fig. 6.

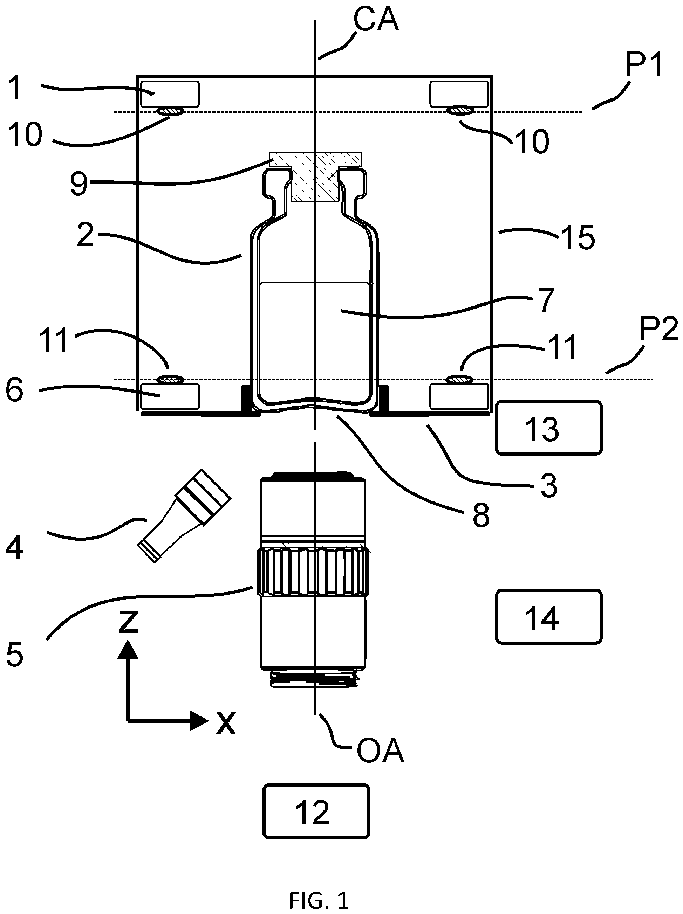

The inspection system shown in Fig. 1 is used for non-destructive inspection of a vial 2, which can be received by a holder 3 of the system. The vial 2 is filled with a solution 7 and it is sealed. The system comprises a lens 5, such as an objective lens or a microscope objective lens, which is arranged below the holder 3. The lens 5 may be called in the following "objective lens", but it can be a normal lens. A first plurality of light sources 1 is arranged above the holder 3 and the vial 2, when the vial 2 is placed in the holder 3. The holder 3 can be designed so that the vial 2 always slides into the same position when inserted and in some embodiments it can simultaneously allow unobstructed imaging of more than 99% surface area of the vial's bottom 8 via the objective lens 5.

As shown in Fig. 1, the bottom 8 of the vial 2 faces downwards and the objective lens 5 is arranged such that its optical axis OA is parallel with the z-axis of a coordinate system defined for the system. The objective lens 5 can be an inverted microscope objective with a large working distance.

The light sources of the first plurality of light sources 1 are arranged in an annular arrangement in a first plane P1 above the holder 3 and the vial 2. The plane P1 extends in an xy-plane of the coordinate system. The annular arrangement is preferably centered with a center axis CA of the holder 3.

Each light source 10 of the plurality of light sources 1 is individually controllable. Each light source 10 can be a RGB LED, which comprises three LEDs with one LED that can emit red light, one LED that can emit green light and one LED that can emit blue light. Each LED of a RGB LED can be individually controllable. By separately taking snapshots when a sample vial is illuminated with red, green and blue light, a simple multispectral image can be obtained which can help to identify particles in the vial. Furthermore, any color in the visual wavelength range or white light can be created by each light source 10 when it is a RGB LED.

The system of Fig. 1 further comprises a second plurality of light sources 6 arranged in a second plane P2, preferably above the holder 3. As shown, the second plurality of light sources 6 can be arranged on the holder 3. The light sources 11 of the second plurality of light sources 6 are arranged in an annular arrangement in the second plane P2. The light sources 11 can be located slightly above the bottom 8 of the vial 2. The annular arrangement of the second plurality of light sources 6 is centered with regard to the center axis CA of the holder 3. The center axis CA is parallel to the z-axis of the coordinate system and the second plane P2 is a xy-plane in the coordinate system as shown in Fig. 1. Similarly as the first plurality of light sources 1, each light source 11 of the second plurality of light sources 6 is individually controllable and is preferably a RBG LED.

In the annular arrangement, the light sources of the first plurality of light sources 1 are uniformly arranged. The same applies to the annular arrangement of the second plurality of light sources 6.

The system of Fig. 1 comprises a UV light source 4, which is configured to illuminate the vial 2, in particular the bottom 8 of the vial 2, when the vial 2 is arranged in the holder 3. The UV light source 4 can be configured to emit ultraviolet light at a wavelength of 280 nanometer so that fluorescence light from Trp, which has an absorption peak at 280 nanometer, can be detected.

The arrangement, which comprises the holder 3, the first plurality of light sources 1 and the second plurality of light sources 6, is arranged on a stage 13, which can move the arrangement in the xy-plane. The objective lens 5 is movable along the z-axis and thus along its optical axis OA in order to adjust the distance between the objective lens 5 and the vial 2. For example, the objective lens 5 can be motorized and movable with micrometer precision. The movement of the stage 13 and of the objective lens 5 can be controlled by use of a controller 14.

In the described example, the objective lens 5 cannot be moved in the xy-plane, and the arrangement is fixed with regard to the z-axis. However, in other examples, the arrangement of the holder 3, the first plurality of light sources 1 and the second plurality of light sources 6 could be fixed in position and the objective lens 5 could be moveable along the z-axis as well as in the xy-plane. In other examples, the objective lens 5 could be fixed in position and the arrangement could be moveable along the z-axis as well as in the xy-plane.

A cover 15 can be placed around the vial 2 and the first and second plurality of light sources. The inner wall of the cover 15 can be diffusively reflective. For example, it can be painted white. The cover 15 can be detachably arranged or mounted on the holder 3.

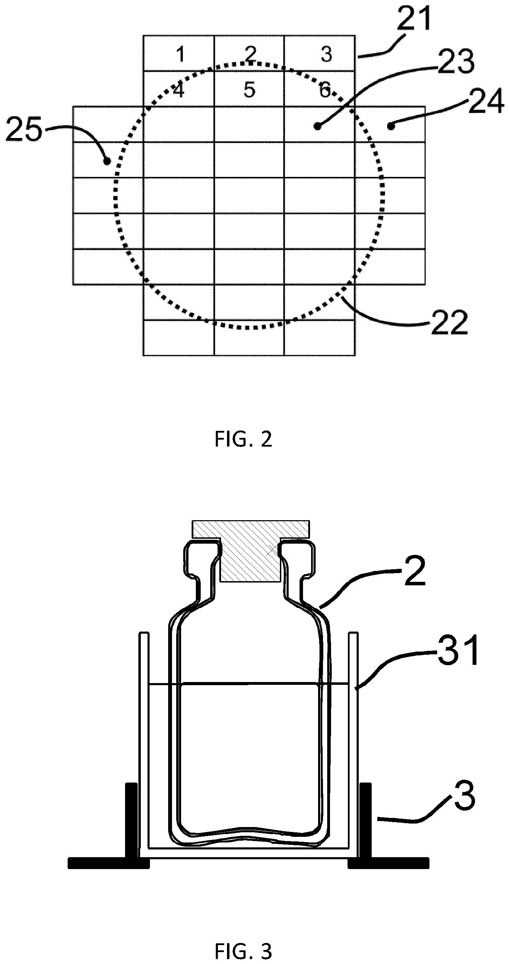

Fig. 2 shows a scanning pattern 21 in the xy-plane and the dots indicate the perimeter 22 of the bottom 8 of the vial 2. The scanning pattern 21 extends in the xy-plane. Each rectangle of the pattern 21 defines a point coordinate having a specific x-value and y-value, while the z-value being the same for all point coordinates. In Fig. 2 point coordinates 23, 24, and 25 are illustrated in the center of three rectangles of the pattern 21. For example, each rectangle can have a size of 2 mm x 1 mm. Such an area can be captured in one shot using microscope objective lens 5 with a low magnification (e.g., 4x magnification).

The scanning pattern 21 is fixed with regard to the stage which is configured to move in a stepwise manner the arrangement of the holder 3, the first plurality of light sources 1 and the second plurality of light sources 6 in the xy-plane with respect to the objective lens 5, such that point coordinates of the set of point coordinates, which are predefined by use of the pattern 21, get consecutively aligned with the optical axis OA of the microscope objective lens 5.

More specifically, at least in some embodiments, the arrangement is moved such that the point coordinate in the center of the rectangle "1" of the pattern 21 is aligned with the optical axis OA of the objective lens 5. Then, the arrangement is moved such that the point coordinate in the center of the rectangle "2" of the pattern 21 is aligned with the optical axis OA of the objective lens 5. Then, the arrangement is moved such that the point coordinate in the center of the rectangle "3" of the pattern 21 is aligned with the optical axis OA of the objective lens 5, and so on. Thereby, as illustrated by the perimeter 22, the whole bottom 8 of the vial 2 can be scanned.

When a point coordinate is aligned with the optical axis OA of the objective lens 5, then one or more pictures can be taken by a camera 12, for example a CMOS camera, that is connected to the objective lens 5. Furthermore, the objective lens 5 can be moved along its optical axis, and thus along the z-axis, to adjust the distance between lens 5 and vial 2. Thereby, the interior of the vial 2 or its bottom 8 can be focussed.

Furthermore, for each point coordinate of the set of point coordinates, a lighting scheme can be predefined which defines which of and how the light sources 10 of the first plurality of light sources 1 and which of and how the light sources 11 of the second plurality of light sources 6 are used for illumination of the system and in particular of the vial. The lighting scheme could be defined for the specific type of vial and stored in form of software on a storage of the controller. The controller 14 could have a processor which executes a computer programs that controls the light sources 10, 11 in accordance with the predefined lighting scheme and in accordance with the point coordinate that is aligned with the optical axis OA of the objective lens 5.

As indicated by Fig. 1, the system can be built based on an inverted microscope. Moreover, the holder 3 can be motorized to rotate the vial 2 around the center axis CA. Due to the rotation, a liquid flow inside the vial can be induced, if desired. With the help of flow, one can discriminate between particles in the vial liquid, which move with the flow, and irregularities in the vial bottom on which the flow has no effect.

At the end of an automatic scanning procedure, a user can quickly review the captured images. If the user notices a particle in any of the images (otherwise, the images are of homogeneous intensity), the user can interactively image the same pattern field again, and perhaps this time with an objective with a greater magnification (10x, 20x,...) or a different type of illumination (for example with respect to wavelength, direction or intensity); as both could help to identify a type of detected particle.

As illustrated by Fig. 3, in particular during the imaging, the user can immerse the vial 2 into a container 31, for example a glass cylinder, which is open on its upper side and filled with water or immersion oil. The liquid can significantly reduce optical aberrations due to the capillary's curved bottom, thus enabling imaging with a better optical resolution. The container 31 can be designed such that it fits into the holder 3.

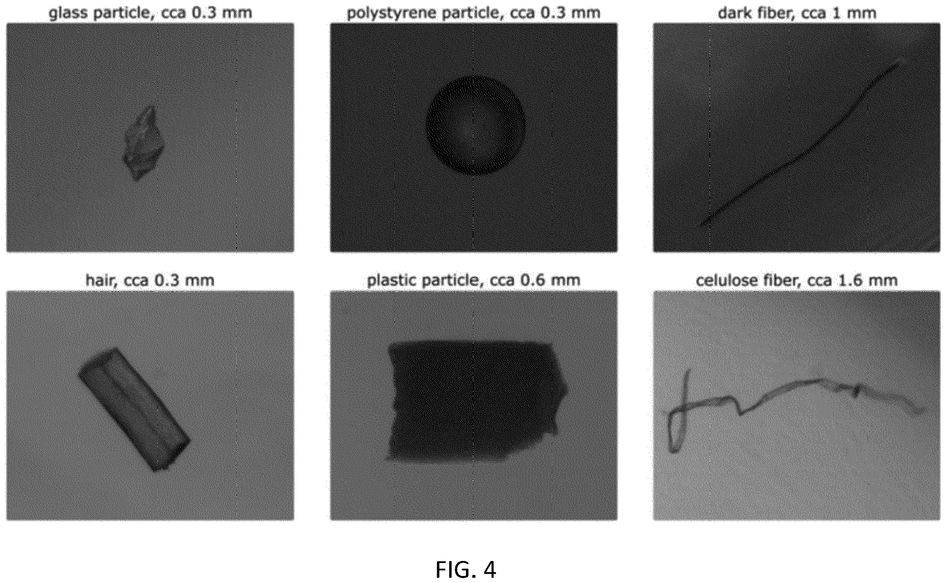

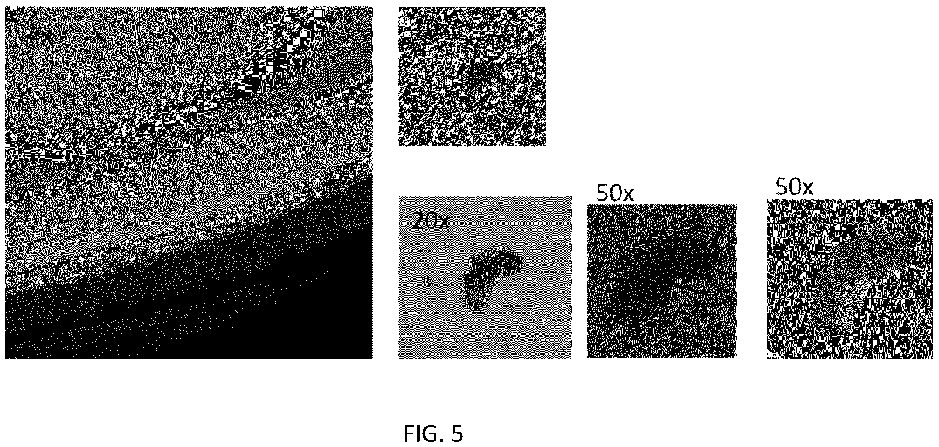

As mentioned before, Fig. 4 shows several sample images of particles imaged as described. Fig. 5 shows a 50-micrometer sized protein particle close to the edge of the vial imaged at different magnification and illumination conditions.

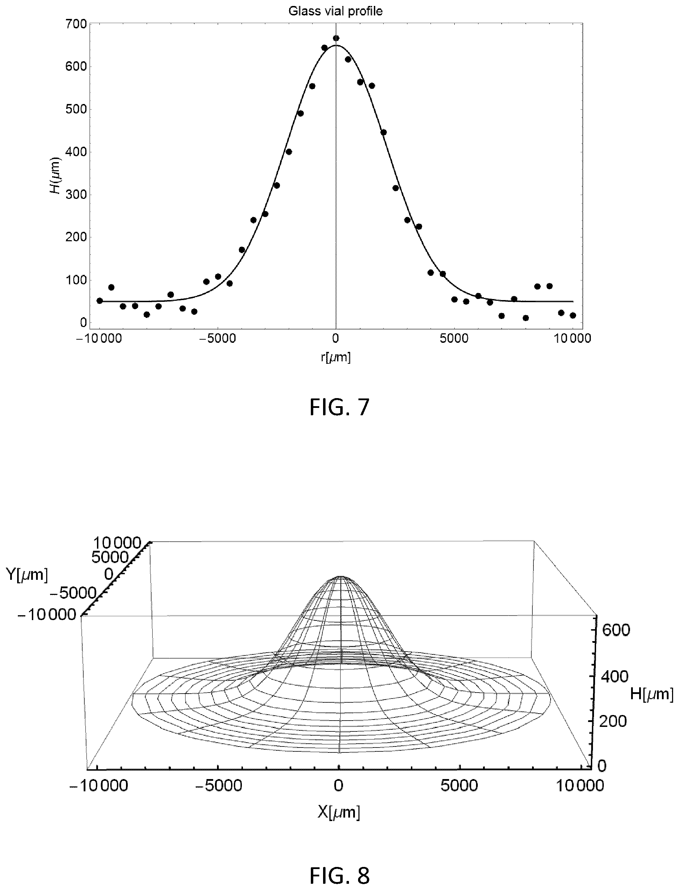

In order to carry out a proper inspection, it is for each type of vial necessary to determine in advance the profile of the bottom 8 of the vial 2, which is a function of the height of the bottom (with respect to the z-axis) in dependence on the vial radius in the xy-plane. Fig. 7 shows a view of a measurement result of a bottom 8 and Fig. 8 shows a measured profile (height over radius) of the bottom 8. As can be seen, the vial's bottom 8 has a depression in its center.

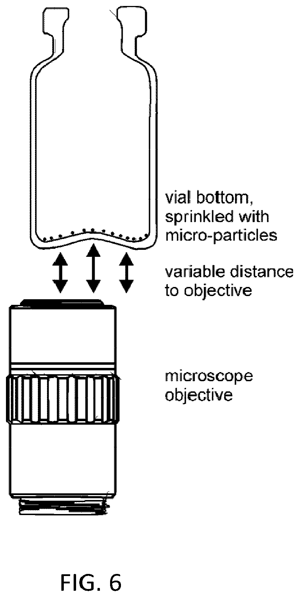

In order to determine the bottom profile of a vial, the following procedure can be carried out by use of the system of Fig. 1. An empty vial 2 of a specific, for example new, type is provided without cap. Dry particles are sprinkled all over the inside bottom surface of the vial 2. The particles can be, for example, polystyrene beads of 10 µm diameter. The vial 2 is then placed into holder 3 and a low magnification objective lens 5, e.g., 4x magnification, is used. The area of the vial bottom 8 is divided into rectangular fields, see the pattern in Fig. 2. Furthermore, the motorized stage 13 is used to move the vial 2 to the center of the first (second, third...) field of the pattern. Thereby, the respective point coordinates defined by the centers of the rectangular fields become aligned with the optical axis of the objective lens 5 as described before. An auto-focusing algorithm is used to determine which objective z-position the dry particles are perfectly focused (see also Fig. 6). There are several auto-focusing algorithms known to the skilled person. This position is the height of the vial bottom as shown in Fig. 8 in dependence on the x-y-coordinate and thus on the radius of the position of the optical axis of the objective lens 5 with regard to the center axis of the vial 2 within the holder 3. The optical axis of the objective lens 5 is aligned with the next point coordinate and the autofocusing step is carried out again. This is repeated until height-values are acquired for all point coordinates. The determined set of points, in view of the xyz-coordinate system, represent the 3D profile of the inside surface of the vial bottom, as shown in Figure 7.

The determination of a lighting scheme and thus of an optimal set of light sources for illuminating a particular vial type filled with a particular solution can be carried out as follows:
A sealed vial 2 is provided that is filled with a particular solution up to a specific level. The vial 2 is placed in the holder 2 of the system of Fig. 1. A low magnification objective lens 5 for imaging, e.g., a 4x-magnification, is used. All the illumination sources, see first and second plurality of light sources, are turned off. Then, the vial bottom area is divided into rectangular fields, thereby a pattern with point coordinates as described above with regard to Fig. 2 is obtained. Then, the motorized stage 13 is used to move the vial 2 such that the point coordinates become consecutively aligned with the optical axis of the objective lens 5. At each point coordinate, a single-point light source (or illumination group if adjacent point lights are grouped together) is turned on of the first plurality of light sources 1 and/or of the second plurality of light sources 6. At least an image is acquired for each point coordinate. The image can be evaluated, for example by use of the microprocessor of the controller 14, as follows: if the image is too dark (underexposed) or too bright (overexposed), the specific point light source (or illumination group) is not suitable to be used for imaging at the respective point coordinate. If the light is suitable, it is added to a list of suitable lights for this point coordinate. This is repeated for all light sources (or illumination groups) until all light sources of the first plurality of light sources 1 and/or the second plurality of light sources 6 have been evaluated for the respective point coordinate.

The stage 13 is then used to move the vial 2 such that the next point coordinate becomes aligned with the optical axis of the objective lens 5, and the above steps are repeated until all light sources of the first plurality of light sources 1 and/or the second plurality of light sources 6 have been evaluated for all point coordinates.

The above-described procedure results in a list holding suitable light sources for all point coordinates and for the specific type of vial that is filled with a particular solution. In some embodiments, all suitable light sources of a specific point coordinate could be turned on during subsequent "real" imaging of vials of this specific type of vials.

The above described systems and methods can in particular by used for the imaging of vials in conjunction with a high-speed camera 12 that is connected to the objective lens 5. It can, for example, be used in filling lines as needed and enable rapid detection of large particles in vials (e.g., glass fragments) as well as the detection of particles below 100 micrometer in size.

### List of reference signs

- 1: first plurality of light sources
- 2: vial
- 3: holder
- 4: UV light source
- 5: objective lens
- 6: second plurality of light sources
- 7: content, solution
- 8: bottom of vial
- 9: top of vial
- 10: light source
- 11: light source
- 12: camera
- 13: stage
- 14: controller
- 15: cylindrical cover for diffuse reflection of light
- 21: pattern
- 22: perimeter
- 23: point coordinate
- 24: point coordinate
- 25: point coordinate
- 31: container
- OA: optical axis
- CA: center axis
- P1: first plane
- P2: second plane

## Claims

1. A system for non-destructive inspection of a vial (2), comprising:
a holder (3) for a vial (2),
a lens (5), in particular a microscope objective lens, arranged below the holder, and
a first plurality of light sources (1),
wherein the holder is configured to hold a vial, when the vial is arranged in the holder, such that a bottom (8) of the vial is facing downward, and
wherein the lens is arranged such that it faces the bottom of the vial, when the vial is arranged in the holder,
wherein light sources (10) of the first plurality of light sources are arranged in an annular arrangement in a plane (P 1) above the top of the holder, such that the light sources are located above a top (9) of the vial, when the vial is arranged in the holder, and
wherein each light source of the plurality of light sources is individually controllable.

2. The system of claim 1,
wherein the light sources are equally spaced from each other and/or wherein a center of the annular arrangement of the light sources is at least approximately aligned with a center axis, in particular a vertical center axis, of the holder.

3. The system of claim 1 or 2,
wherein the system comprises a second plurality of light sources (6), preferably arranged in a plane (P2) above the holder, wherein, preferably, the light sources of the second plurality of light sources are arranged in an annular arrangement in the plane, in particular such that the light sources are located above the bottom of the vial, when the vial is arranged in the holder, and
wherein, further preferably, each light source of the second plurality of light sources is individually controllable,
wherein, further optionally, the second plurality of light sources (6) is arranged on the holder (3).

4. The system of any one of the preceding claims,
wherein the system comprises at least one UV light source (4) configured to illuminate the vial, in particular the bottom of the vial, when the vial is arranged in the holder,
wherein, optionally, the UV light source is adapted to provide ultraviolet light at a wavelength of at least approximately 280 nanometer.

5. The system of any one of the preceding claims,
wherein the holder, the first plurality of light sources, and optionally a second plurality of light sources are fixed in position with respect to each other, and/or
wherein the lens and/or an arrangement of the holder, the first plurality of light sources and optionally the second plurality of light sources are movable with respect to each other in a motion plane, in particular xy-plane,
wherein the motion plane is at least approximately orthogonal to an optical axis, in particular z-axis, of the objective lens.

6. The system of claim 5,
the arrangement and the lens are moveable with respect to each other in the motion plane in a stepwise manner such that a set of predefined point coordinates (23, 24, 25) in the motion plane become consecutively aligned with the optical axis (OA) of the lens.

7. The system of claim 5 or 6,
wherein at least the arrangement of the holder, the first plurality of light sources and optionally the second plurality of light sources are arranged on a stage (13), in particular a xy-translation stage,
wherein the stage is configured to move in a stepwise manner the arrangement in the motion plane with respect to the lens, such that a set of predefined point coordinates in the motion plane are consecutively aligned with the optical axis of the lens.

8. The system of claim 6 or 7,
wherein the set of predefined point coordinates consists of or comprises point coordinates that are arranged in a pattern (21), for example a rectangular pattern, in the motion plane, wherein, preferably, the pattern covers at least the bottom of the vial, when the vial is arranged in the holder.

9. The system of any one of the claims 6 to 8,
wherein the system comprises a camera (12) which is connected to the lens, wherein the camera is configured to take at least one picture of at least a portion of the bottom of the vial when a point coordinate is aligned with the optical axis of the lens.

10. The system of any one of the claims 6 to 9,
wherein the system, in particular a controller (14) of the system, is configured to control the light sources of the first plurality of light sources and optionally the light sources of the second plurality of light sources in accordance with a predefined lighting scheme given for the vial,
wherein the predefined lighting scheme specifies for each point coordinate which of the light sources of the first plurality of light sources is/are used for illumination and, optionally which of the light sources of the second plurality of light sources is/are used for illumination.

11. The system of any one of the preceding claims,
wherein the lens is movable, in particular by control of a controller (14) of the system, along its optical axis for adjustment of the distance between the lens and the bottom of the vial, in particular in dependence on the respective point coordinate that is aligned with the optical axis of the lens and/or in dependence on a predetermined profile of the bottom of the vial.

12. The system of any one of the preceding claims,
wherein the holder is rotatable around its center axis, preferably such that, when the vial is located in the holder, the vial is rotated around its center axis, and/or
wherein a cover, in particular a cylindrical cover, is arranged on the holder, wherein the cover surrounds the vial and the first plurality of light sources and an optional second plurality of light sources.

13. A method of non-destructively inspecting a vial (2), in particular by use of a system in accordance with any one of the preceding claims, the method comprising:
arranging a vial (2) in a holder (3) such that a bottom (8) of the vial is facing downward,
obtaining at least one picture of at least a portion of the bottom of the vial by use of a camera (12) that is connected to a lens (5) which is arranged such that it faces the bottom of the vial,
while obtaining the at least one picture, individually controlling light sources of a first plurality of light sources (1), which is arranged in an annular arrangement in a plane (P1) above the top of the holder, such that the light sources are located above a top (9) of the vial, in accordance with a predefined lighting scheme which specifies which of the light sources of the first plurality of light sources is/are used for illumination.

14. The method of claim 13,
wherein light sources of a second plurality of light sources (6), which is arranged in a plane above the holder and/or on the holder in an annular arrangement, are individually controlled for illumination in accordance with the predefined lighting scheme, which specifies which of the light sources of the second plurality of light sources is/are used for illumination.

15. The method of claim 13 or 14,
wherein the lens and/or an arrangement of the holder, the first plurality of light sources and optionally the second plurality of light sources are moved in a stepwise manner with respect to each other in a motion plane, in particular xy-plane, such that a set of predefined point coordinates in the motion plane become consecutively aligned with the optical axis of the lens, and
wherein the motion plane is at least approximately orthogonal to an optical axis, in particular z-axis, of the lens.

16. The method of claim 15,
wherein the lighting scheme is dependent on the respective point coordinate which is aligned with the optical axis of the lens.

17. A method of non-destructively inspecting a vial, in particular by use of a system in accordance with any one of the claims 1 to 12, the method comprising:
providing a vial (2) being of a type of vials in the holder (3), such that a bottom (8) of the vial is facing downward, wherein the vial is filled with dry particles that cover the bottom of the vial,
moving a lens (5) and/or an arrangement of the holder, a first plurality of light sources (1) and optionally a second plurality of light sources (6) in a stepwise manner with respect to each other in a motion plane, such that a set of predefined point coordinates (23, 24, 25) in the motion plane become consecutively aligned with the optical axis (OA) of the lens, wherein the optical axis of the lens is arranged at least approximately orthogonal to the motion plane and wherein the lens is arranged below the vial such that it faces the bottom of the vial, and
determining, for each point coordinate, by moving the lens along its optical axis, a position of the lens at which the dry particles are focused,
determining a profile of the bottom of the type of vials based on the determined positions of the o lens.

18. A method of non-destructively inspecting a vial, in particular by use of a system in accordance with any one of the claims 1 to 12, the method comprising:
providing, in a holder (3), a sealed vial (2) that is filled with a particular medium, in particular solution, such that a bottom of the vial is facing downward,
moving a lens (5) and/or an arrangement of the holder, a first plurality of light sources (1) and optionally a second plurality of light sources (6) in a stepwise manner with respect to each other in a motion plane, such that a set of predefined point coordinates in the motion plane become consecutively aligned with an optical axis of the lens, wherein
the optical axis of the lens is arranged at least approximately orthogonal to the motion plane, wherein the lens is arranged below the vial such that it faces the bottom of the vial, and
determining, for each point coordinate, when the point coordinate is aligned with the lens, which of the light sources of the first plurality of light sources and optionally which of the light sources of the second plurality of light sources are suitable for illumination of the vial at the respective point coordinate by use of at least the following steps:
(a) turning on a single light source or a group of light sources and evaluating the obtained picture,
(b) if the image is too dark or too bright, then the specific light source or group of light sources is not suitable to be used for imaging and otherwise storing the light source or the group of light sources in a lighting scheme for the respective point coordinate,
(c) repeating steps (a) and (b) until all light sources have been evaluated for all point coordinates.
